(19) Europäisches Patentamt
European Patent Office
Office européen des brevets

(11) **EP 4 036 297 B1**

(12) **EUROPÄISCHE PATENTSCHRIFT**

(45) Veröffentlichungstag und Bekanntmachung des Hinweises auf die Patenterteilung:
**24.04.2024   Patentblatt 2024/17**

(21) Anmeldenummer: **21154643.7**

(22) Anmeldetag: **01.02.2021**

(51) Internationale Patentklassifikation (IPC):
**D04H 3/007** *(2012.01)*   **B32B 5/26** *(2006.01)*
**D04H 3/147** *(2012.01)*

(52) Gemeinsame Patentklassifikation (CPC):
**D04H 3/007; B32B 5/267; D04H 3/147;**
B32B 2250/02; B32B 2250/03; B32B 2250/20;
B32B 2262/0253; B32B 2262/124; B32B 2262/16;
B32B 2270/00; B32B 2307/4026; B32B 2307/718

(54) **SPINNVLIESLAMINAT UND VERFAHREN ZUR HERSTELLUNG EINES SPINNVLIESLAMINATES**

SPUN NONWOVEN LAMINATE AND METHOD FOR PRODUCING A SPUN NONWOVEN LAMINATE

LAMINÉ DE NON-TISSÉ ET PROCÉDÉ DE FABRICATION D'UN LAMINÉ DE NON-TISSÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**03.08.2022   Patentblatt 2022/31**

(73) Patentinhaber: **Reifenhäuser GmbH & Co. KG Maschinenfabrik**
**53844 Troisdorf (DE)**

(72) Erfinder:
• **WAGNER, Tobias**
**50823 Köln (DE)**
• **SOMMER, Sebastian**
**53844 Troisdorf (DE)**
• **BOHL, Patrick**
**53773 Hennef (DE)**

(74) Vertreter: **Andrejewski - Honke**
**Patent- und Rechtsanwälte Partnerschaft mbB**
**An der Reichsbank 8**
**45127 Essen (DE)**

(56) Entgegenhaltungen:
**EP-A1- 3 246 443      DE-A1-102013 111 499**
**DE-T2- 69 820 099**

**Beschreibung**

Die Erfindung betrifft ein Spinnvlieslaminat mit mindestens zwei Spinnvlieslagen, wobei mindestens eine Spinnvlieslage gekräuselte Endlosfilamente aufweist bzw. aus gekräuselten Endlosfilamenten besteht bzw. im Wesentlichen besteht, wobei die gekräuselten Endlosfilamente Mehrkomponentenfilamente, insbesondere Bikomponentenfilamente sind. Die Erfindung betrifft weiterhin ein Verfahren zur Herstellung eines Spinnvlieslaminates. - Es liegt im Rahmen der Erfindung, dass es sich bei den Endlosfilamenten um Endlosfilamente aus thermoplastischem Kunststoff handelt. Endlosfilamente unterscheiden sich aufgrund ihrer quasi endlosen Länge von Stapelfasern, die viel geringere Längen von beispielsweise 10 mm bis 60 mm aufweisen.

Spinnvlieslaminate der vorstehend beschriebenen Art und entsprechende Verfahren zur Herstellung solcher Spinnvlieslaminate sind aus dem Stand der Technik und aus der Praxis in unterschiedlichen Ausführungsformen bekannt. Für viele Anwendungen werden Vliese bzw. Vlieslaminate mit einer großen Dicke und einer möglichst geringen Flächenmasse benötigt. Eine große Dicke erreicht man in der Regel durch den Einsatz von gekräuselten oder gewellten Filamenten (gecrimpte Filamente). Hierbei werden spiralförmig gekräuselte Filamente (spiral bzw. helical crimp) bevorzugt. Zur Erzeugung von gekräuselten bzw. gecrimpten Filamenten werden Multikomponentenfilamente bzw. Bikomponentenfilamente eingesetzt. Für die Erzielung einer Kräuselung ist es ausreichend, wenn sich beide Komponenten von Bikomponentenfilamenten in der Breite der Molmassenverteilung unterscheiden. Auch andere Unterschiede (Viskosität, Schmelzpunkt, im Allgemeinen unterschiedliche Erstarrungsvorgänge) bzw. Kombinationen davon ergeben eine Kräuselung. Häufig kann die erreichbare maximale Kräuselung für eine bestimmte Rezeptur nur in langsamen Einzelbalkenverfahren zur Erzeugung einzelner Spinnvliese in allen Ausprägungen genutzt werden. Beim Mehrbalkenverfahren zur kontinuierlichen Erzeugung einer Mehrzahl von Spinnvlieslagen ist diese Kräuselung oft zu stark und es ergibt sich eine unerwünschte inhomogene Ablage bzw. eine Ablage mit unerwünscht reduzierter Dimensionsstabilität. Wenn bislang bei Mehrbalkenanlagen ein Kompromiss zwischen hoher Dicke und zufriedenstellender Filamentablage gesucht wurde, ging dies in der Regel auf Kosten der Dicke. Bei Drei-Balkenanlagen und somit entsprechender dreifacher Produktionsgeschwindigkeit zur Erzeugung von Vlieslaminaten mit Flächenmassen zwischen 20 und 25 g/m$^2$ ist beispielsweise eine Reduktion auf die Hälfte oder zwei Drittel der Dicke einer Einzellage nicht unüblich. Bei Mehrbalkenanlagen könnte die Qualität der Ablage durch feinere Filamente verbessert werden. Die aus dem Stand der Technik bekannten Mischungen zeigen allerdings bei feineren Filamenten (mehr Kabinendruck in der Kühlkabine, mehr Verstreckluft beim Verstrecken, weniger Durchsatz) typischerweise eine Reduktion der Vliesdicke. Die Vorteile einer besseren Ablage und Produktivität können hier also nicht mit einer hohen Dicke kombiniert werden.

Feinfaservliese sind aus dem europäischen Patent EP 3 521 495 B1 der Anmelderin bekannt. Diese Feinfaservliese weisen eine gute Deckung sowie eine qualitativ hochwertige Ablage auf und zeichnen sich durch eine weiche homogene Oberfläche aus. Bei Mehrbalkenanwendungen lässt aber auch die Dicke zu wünschen übrig.

EP3246443 offenbart ebenfalls ein Spinnvlieslaminat.

Zur Erzeugung einer ausreichenden Kräuselung und einer hohen Dicke werden insbesondere Mehrkomponentenfilamente bzw. Bikomponentenfilamente mit Seite-an-Seite-Konfiguration oder mit exzentrischer Kern-Mantel-Konfiguration eingesetzt. Die Bereitstellung einer hohen Dicke ist in der Regel mit einer relativ hohen Flächenmasse des Vliesstoffes verbunden. Das gilt einerseits für einlagige Vliese, insbesondere aber für in Mehrbalkenanlagen erzeugte Mehrbalkenvliese.

Das Erzeugen mehrerer Lagen bedeutet, dass Lagen einerseits jeweils stärker kompaktiert bzw. vorverfestigt werden müssen, um beim Durchlauf der späteren Balken die Ablage dieser Lagen nicht zu beschädigen, aber auch dass erste Lagen beim Auflegen der nächsten Lagen zusätzlich weiter kompaktiert werden und damit gegenüber entsprechend in Einzellagen erreichbaren guten Dicken auch die Dicke des Spinnvlieslaminates deutlich reduziert wird. Vor allem bei Mehrbalkenanlagen von beispielsweise drei oder mehr Balken besteht somit im Hinblick auf die Erreichung einer hohen Dicke bei gleichzeitig geringer Flächenmasse ein Zielkonflikt und die Lösung dieses Zielkonfliktes stellte den Fachmann bislang vor unlösbare Probleme. Bislang führte das Erreichen einer Ziel-Vliesdicke in der Regel zu einem überproportionalen Ansteigen der Flächenmasse der Vlieslage bzw. des Vlieslaminates oder zu einem dicken Laminat mit inhomogener Ablage. Dadurch resultiert auch ein unerwünscht hoher Materialeinsatz und somit hohe Kosten.

Wünschenswert ist also eine hohe Dicke bei möglichst geringer Flächenmasse. Dabei ist auch zu berücksichtigen, dass ein solches Spinnvlieslaminat die Anforderungen in Bezug auf Weichheit, Festigkeit und insbesondere Dimensionsstabilität erfüllen muss. Eine ausreichende Festigkeit und vor allem eine ausreichende Dimensionsstabilität sind für die Weiterverarbeitung erforderlich. Die gewünschten Eigenschaften werden bei aus dem Stand der Technik bekannten Laminaten durch Armierungslagen, beispielsweise Vlieslagen ohne Kräuselung oder Vlieslagen mit reduzierter Kräuselung erzielt oder durch die Kombination einer stabilen Feinfaser-Vlieslage (z. B. mit Filamenten unter 1,5 denier Titer) bei dichterem Netzwerk und mittlerer Kräuselung mit dickeren Vlieslagen mit Fasern von normalem Titer (beispielsweise 1,7 bis 2 denier) und bei größerem Crimp. Dabei ist aber die Flächenmasse des Laminates relativ hoch.

Der Erfindung liegt das technische Problem zugrunde, ein Spinnvlieslaminat der eingangs genannten Art anzugeben, das bei im Wesentlichen konstantem Materialeinsatz im Vergleich zu den aus der Praxis bzw. aus dem Stand der Technik bekannten Vliesen eine höhere Dicke aufweist - insbesondere auch bei der Produktion in Mehrbalkenanlagen - und zugleich auch eine optimale Weichheit, eine hohe Festigkeit und insbesondere eine hohe Dimensionsstabilität aufweist. Der Erfindung liegt fernerhin das technische Problem zugrunde, ein entsprechendes Verfahren zur Herstellung eines solchen Spinnvlieslaminates anzugeben.

Zur Lösung dieses technischen Problems lehrt die Erfindung ein Spinnvlieslaminat mit mindestens zwei Spinnvlieslagen, wobei mindestens eine Spinnvlieslage gekräuselte Endlosfilamente aufweist bzw. aus gekräuselten Endlosfilamenten besteht bzw. im Wesentlichen besteht, wobei die gekräuselten Endlosfilamente Mehrkomponentenfilamente, insbesondere Bikomponentenfilamente mit einer ersten Komponente auf Basis von Polypropylen und einer zweiten Komponente auf Basis von Polypropylen sind und wobei die spezifische Dichte $\varrho$ [g/cm$^3$] des Spinnvlieslaminates in Abhängigkeit der Flächenmasse des Spinnvlieslaminates unterhalb einer Grenzdichte $\varrho_G$ liegt, die durch die folgende Gleichung definiert ist:

$$\varrho_G = 9\,\frac{1}{cm} \times \textit{Flächenmasse}\ \frac{g}{cm^2} + 0{,}0393\ \frac{g}{cm^3}$$

und wobei mindestens eine Spinnvlieslage gekräuselte Endlosfilamente mit Kern-Mantel-Konfiguration, bevorzugt mit exzentrischer Kern-Mantel-Konfiguration, aufweist.

Die spezifische Grenzdichte $\varrho_G$ steht somit in linearer Abhängigkeit zu der Flächenmasse des Spinnvlieslaminates.

Ein erfindungsgemäßes Spinnvlieslaminat kann aus lediglich zwei Spinnvlieslagen bestehen, wobei mindestens eine dieser Spinnvlieslagen die gekräuselten Endlosfilamente aufweist. Es liegt aber auch im Rahmen der Erfindung, dass ein erfindungsgemäßes Spinnvlieslaminat mehr Lagen bzw. Vlieslagen aufweist und beispielsweise zwei oder mehr Spinnvlieslagen mit gekräuselten Endlosfilamenten umfasst und/oder zwei oder mehr Spinnvlieslagen mit Filamenten ohne bzw. geringer Kräuselung aufweist. Wesentlich ist im Rahmen der Erfindung, dass bei dem Laminat wenigstens zwei Spinnvlieslagen vorhanden sind, von denen mindestens eine Spinnvlieslage die gekräuselten Endlosfilamente aufweist.

Eine sehr empfohlene Ausführungsform der Erfindung ist dadurch gekennzeichnet, dass die erste Komponente der Mehrkomponentenfilamente bzw. Bikomponentenfilamente aus einer Polypropylenmischung besteht bzw. im Wesentlichen besteht oder aus einem Polypropylen-Copolymer (CoPP) besteht bzw. im Wesentlichen besteht. Der Ausdruck "im Wesentlichen besteht" meint insbesondere, dass die erste Komponente zu mindestens 90 Gew.-%, vorzugsweise zu mindestens 95 Gew.-% und bevorzugt zu mindestens 98 Gew.-% aus der Polypropylen-Mischung bzw. aus dem Polypropylen-Copolymer besteht. Diese Aussage "im Wesentlichen besteht" trägt insbesondere dem Umstand Rechnung, dass neben der genannten Substanz auch noch Additive und dergleichen in der ersten Komponente enthalten sein können. Diese Additive sind insbesondere aktive Substanzen wie Farben, Weichmacher/Gleitmittel, oberflächenaktive Substanzen, Nukleierungsmittel oder Füllstoffe wie Kreide. Mit dem Begriff "Polypropylen-Mischung" ist insbesondere die Mischung von zwei oder mehr Homopolypropylenen gemeint oder die Mischung von zumindest einem Homopolypropylen mit zumindest einem Polypropylen-Copolymer oder die Mischung von zwei oder mehr Polypropylen-Copolymeren. Polypropylen-Copolymer meint insbesondere auch entsprechende Random-Copolymere.

Es liegt im Rahmen der Erfindung, dass die zweite Komponente der Mehrkomponentenfilamente bzw. Bikomponentenfilamente aus einem Polypropylen besteht bzw. im Wesentlichen besteht. Der Ausdruck "im Wesentlichen" meint insbesondere, dass die zweite Komponente zu mindestens 90 Gew.-%, vorzugsweise zu mindestens 95 Gew.-% und bevorzugt zu mindestens 98 Gew.-% aus dem Polypropylen besteht. Dass die zweite Komponente aus einem Polypropylen besteht bzw. im Wesentlichen besteht, meint im Rahmen der Erfindung vorzugsweise, dass die zweite Komponente aus einem Homopolypropylen besteht bzw. im Wesentlichen besteht oder aus einem Polypropylen-Copolymer besteht bzw. im Wesentlichen besteht. Grundsätzlich könnte die zweite Komponente auch aus einer Polypropylen-Mischung bestehen bzw. im Wesentlichen bestehen, wobei dann insbesondere die zu der Polypropylen-Mischung abgegebene Definition für die erste Komponente gilt. Auch hier können wieder Additive wie in der ersten Komponente enthalten sein, wobei sich Art und Anteil der Additive zwischen den Komponenten unterscheiden können.

Eine besonders bevorzugte Ausführungsform der Erfindung ist dadurch gekennzeichnet, dass die zumindest eine Spinnvlieslage mit gekräuselten Endlosfilamenten Filamente mit einem Titer bis 2 denier, vorzugsweise mit einem Titer kleiner 2 denier, bevorzugt mit einem Titer kleiner 1,5 denier, besonders bevorzugt von 1 bis 1,7 denier und ganz besonders bevorzugt von 1,2 bis 1,7 denier aufweist. Der Erfindung liegt insoweit die Erkenntnis zugrunde, dass die Lösung des technischen Problems durch eine ausreichende Kräuselung der Filamente mit feineren Filamenten erzielt wird, wobei diese feineren Filamente ein stabiles Netzwerk der Ablage und damit ein dimensionsstabiles Produkt ermöglichen.

Die Erfindung zeichnet sich dadurch aus, dass die gekräuselten Endlosfilamente der zumindest einen Spinnvlieslage mit gekräuselten Endlosfilamenten eine Kern-Mantel-Konfiguration aufweisen und besonders bevorzugt eine exzentrische Kern-Mantel-Konfiguration aufweisen. Dabei bildet zweckmäßigerweise die erste Komponente der Multikomponentenfilamente bzw. Bikomponentenfilamente die Mantelkomponente und die zweite Komponente bildet die Kernkomponente.

Eine sehr empfohlene Ausführungsform der Erfindung ist dadurch gekennzeichnet, dass mindestens 25 % aller Filamente bzw. Endlosfilamente des erfindungsgemäßen Laminates gekräuselte Endlosfilamente mit Kern-Mantel-Konfiguration, insbesondere mit exzentrischer Kern-Mantel-Konfiguration sind. Der vorstehende Anteil der Filamente (Faseranteil) wird zweckmäßigerweise wie folgt bestimmt: Das Spinnvlieslaminat wird über eine Länge von mindestens 10 mm geschnitten und von der Schnittfläche wird ein REM-Bild gemacht und ausgewertet. Der Faseranteil der hier in Rede stehenden Filamentart entspricht der Anzahl der entsprechenden Filamente im Blickfeld, bezogen auf alle Filamente in der Schnittfläche im Blickfeld.

Es liegt im Rahmen der Erfindung, dass bei den gekräuselten Endlosfilamenten mit exzentrischer Kern-Mantel-Konfiguration der Mantel der Filamente - im Filamentquerschnitt gesehen - über zumindest 20 %, insbesondere über zumindest 25 %, vorzugsweise über zumindest 30 %, bevorzugt über zumindest 35 % und besonders bevorzugt über zumindest 40 % des Filamentumfanges eine konstante Dicke D bzw. eine im Wesentlichen konstante Dicke D aufweist. Zweckmäßigerweise beträgt die Dicke des Mantels im Bereich seiner konstanten bzw. im Wesentlichen konstanten Dicke D 0,1 bis 4 $\mu$m, vorzugsweise 0,1 bis 3 $\mu$m, bevorzugt 0,1 bis 2 $\mu$m und sehr bevorzugt 0,1 bis 0,9 $\mu$m. Es empfiehlt sich, dass die Dicke D mindestens 100 nm beträgt und dass sich die Dicke lokal um bis zu maximal 400 nm, insbesondere bis zu maximal 300 nm, bevorzugt bis zu maximal 200 nm von der mittleren Dicke in dem konstanten Dickenbereich bzw. in dem im Wesentlichen konstanten Dickenbereich unterscheidet.

Eine sehr bevorzugte Ausführungsform der Erfindung ist dadurch gekennzeichnet, dass das erfindungsgemäße Laminat zumindest drei Spinnvlieslagen aufweist, wobei mindestens eine Spinnvlieslage mit gekräuselten Endlosfilamenten- insbesondere mit gekräuselten Endlosfilamenten mit exzentrischer Kern-Mantel-Konfiguration - an einer Außenseite des Laminates angeordnet ist und dass vorzugsweise der Titer der Endlosfilamente dieser Spinnvlieslage bis 2 denier beträgt, bevorzugt weniger als 2 denier beträgt, besonders bevorzugt weniger als 1,5 denier, insbesondere 1 bis 1,7 denier beträgt und sehr bevorzugt 1,2 bis 1,7 denier beträgt.

Eine sehr empfohlene Ausführungsform der Erfindung zeichnet sich dadurch aus, dass das erfindungsgemäße Spinnvlieslaminat eine Flächenmasse im Bereich von 10 bis 40 g/m$^2$, insbesondere im Bereich von 12 bis 35 g/m$^2$, vorzugsweise im Bereich von 13 bis 30 g/m$^2$, bevorzugt im Bereich von 14 bis 25 g/m$^2$ und sehr bevorzugt im Bereich von 15 bis 22 g/m$^2$ aufweist.

Es liegt im Rahmen der Erfindung, dass die erste Komponente der Mehrkomponentenfilamente bzw. Bikomponentenfilamente zumindest ein Polypropylen-Copolymer (CoPP) ist bzw. ein Polypropylen-Copolymer aufweist, wobei diese erste Komponente vorzugsweise einen Anteil des Co-Monomers von 1 bis 7 Gew.-%, bevorzugt von 1,5 bis 5 Gew.-% aufweist. Es hat sich gezeigt, dass durch diese Ausführungsform die Weichheit des erfindungsgemäßen Laminates verbessert werden kann. Vorzugsweise ist eine entsprechende Spinnvlieslage mit diesen gekräuselten Endlosfilamenten an einer Außenseite bzw. an einer Oberfläche des erfindungsgemäßen Spinnvlieslaminates angeordnet. Dabei sind die gekräuselten Endlosfilamente dieser Spinnvlieslage an der Oberfläche des Laminates vorzugsweise gekräuselte Endlosfilamente mit exzentrischer Kern-Mantel-Konfiguration und das vorgenannte Polypropylen-Copolymer ist in der Mantelkomponente der gekräuselten Endlosfilamente enthalten.

Eine besonders empfohlene Ausführungsform der Erfindung zeichnet sich dadurch aus, dass die erste und die zweite Komponente der Mehrkomponentenfilamente bzw. Bikomponentenfilamente unterschiedliche Schmelzflussraten (MFI) aufweisen und dass bei Endlosfilamenten mit Kern-Mantel-Konfiguration vorzugsweise die die Kernkomponente bildende zweite Komponente eine höhere Schmelzflussrate aufweist als die die Mantelkomponente bildende erste Komponente. Es liegt im Rahmen der Erfindung, dass das Verhältnis der Schmelzflussrate der zweiten Komponente - insbesondere der Kernkomponente - zur Schmelzflussrate der ersten Komponente - insbesondere der Mantelkomponente - 0,9 bis 2,5 und vorzugsweise 1 bis 2,2 beträgt. Die Schmelzflussrate wird im Rahmen der Erfindung vorzugsweise nach ISO 1133 in g/10 min bei den Bedingungen 230 °C und 2,16 kg gemessen.

Eine besonders bewährte Ausführungsform der Erfindung zeichnet sich dadurch aus, dass das Verhältnis des Polydispersitätsindex (PI) der ersten Komponente - insbesondere der Mantelkomponente - zum Polydispersitätsindex (PI) der zweiten Komponente - insbesondere der Kernkomponente - 0,9 bis 1,4, insbesondere 1 bis 1,35 beträgt. Empfohlenermaßen weist die erste Komponente - insbesondere die Mantelkomponente - eine breitere Molmassenverteilung auf als die zweite Komponente - insbesondere die Kernkomponente. Der Polydispersitätsindex ist dabei der Quotient aus dem Massenmittel der Molmasse $M_w$ und dem Zahlenmittel der Molmasse $M_n$ (PI = $M_w/M_n$). Die mittleren Molmassen werden dabei insbesondere durch Gelpermeationschromatographie (GPC) gemessen und zwar vorzugsweise entsprechend ISO 16014-1:2003, ISO 16014-2:2003, ISO 16014-4:2003 und ASTM D6474-12. Der Polydispersitätsindex (PI

= $M_w/M_n$) wird typischerweise für sortenreine Polymere gemessen. Der Einfachheit halber wird hier davon ausgegangen, dass sich der Polydispersitätsindex einer Polymermischung aus den Polydispersitätsindizes der Einzelrohstoffe entsprechend ihrer Anteile zusammensetzt. Der Polydispersitätsindex einer Polymermischung aus den Polymeren A und B berechnet sich dann nach der folgenden Formel:

$$PI \text{ (Mischung } A + B) = \text{Anteil } A \times PI \text{ (A)} + \text{Anteil } B \times PI \text{ (B)}.$$

Eine Polymermischung mit 60 % A und mit 40 % B hat dann einen Polydispersitätsindex PI (A + B) = 0,6 $\times$ PI (A) + 0,4 $\times$ PI (B).

Gemäß einer empfohlenen Ausführungsform der Erfindung ist die Schmelztemperatur der ersten Komponente - insbesondere der Mantelkomponente - kleiner als die Schmelztemperatur der zweiten Komponente - insbesondere der Kernkomponente - und dabei beträgt die Schmelztemperaturdifferenz zweckmäßigerweise 0 bis 20 °C, vorzugsweise 1 bis 18 °C und bevorzugt 2 bis 16 °C. Der Erfindung liegt insoweit die Erkenntnis zugrunde, dass sich bei dieser Ausführungsform ein reduzierter Aufwand bei der thermischen Verfestigung der Vlieslagen und/oder des Vlieslaminates ergibt, da die Mantelkomponente durch die geringere Schmelztemperatur leichter aufschmilzt als die Kernkomponente. Empfohlenermaßen werden die Schmelztemperaturen im Rahmen der Erfindung durch DSC (differential scanning calorimetry) entsprechend ISO 11357-3 gemessen.

Eine bevorzugte Ausführungsform der Erfindung ist dadurch gekennzeichnet, dass die zweite Komponente bzw. die als Kernkomponente eingesetzte zweite Komponente zumindest ein Gleitmittel aufweist und zwar vorzugsweise mindestens 1.000 ppm (bezogen auf das gesamte Filament) zumindest eines Gleitmittels aufweist. Der Erfindung liegt hier die Erkenntnis zugrunde, dass auf diese Weise die Weichheit des Spinnvlieslaminates verbessert werden kann, insbesondere wenn die betreffende Vlieslage an einer Oberfläche bzw. an einer Außenseite des Laminates angeordnet ist. Durch die Beimischung in die Kernkomponente wird die Kontamination der Spinnvlieslage durch ausdampfendes Gleitmittel reduziert.

Zur Lösung des technischen Problems lehrt die Erfindung weiterhin ein Verfahren zur Herstellung eines Spinnvlieslaminates mit mindestens zwei Spinnvlieslagen, wobei zumindest eine Spinnvlieslage mit gekräuselten Endlosfilamenten erzeugt wird, wobei die gekräuselten Endlosfilamente Mehrkomponentenfilamente, insbesondere Bikomponentenfilamente mit einer ersten Komponente auf Basis von Polypropylen und einer zweiten Komponente auf Basis von Polypropylen sind,

wobei zumindest eine Spinnvlieslage mittels zumindest einer Heißwalze und/oder mittels zumindest einer Kalanderwalze und/oder mit zumindest einem Heißluftofen kompaktiert bzw. vorverfestigt wird, wobei das Spinnvlieslaminat mittels zumindest einer Kalanderwalze endverfestigt wird

und wobei das Laminat mit der Maßgabe hergestellt wird, dass die spezifische Dichte $\varrho$ [g/cm³] des Spinnvlieslaminates in Abhängigkeit von der Flächenmasse des Spinnvlieslaminates unterhalb einer Grenzdichte $\varrho_G$ liegt, die durch folgende Gleichung definiert ist:

$$\varrho_G = 9\frac{1}{cm} \times Fl\ddot{a}chenmasse \frac{g}{cm^2} + 0{,}0393\frac{g}{cm^3}$$

und wobei mindestens eine Spinnvlieslage gekräuselte Endlosfilamente mit Kern-Mantel-Konfiguration, bevorzugt mit exzentrischer Kern-Mantel-Konfiguration, aufweist.

Es liegt im Rahmen der Erfindung, dass die zumindest eine Spinnvlieslage mit gekräuselten Endlosfilamenten in der beschriebenen Weise kompaktiert bzw. vorverfestigt wird. Fernerhin liegt es im Rahmen der Erfindung, dass zumindest zwei, vorzugsweise alle Spinnvlieslagen des erfindungsgemäßen Spinnvlieslaminates jeweils in der genannten Weise kompaktiert bzw. vorverfestigt werden.

Eine besonders bevorzugte Ausführungsform des erfindungsgemäßen Verfahrens ist dadurch gekennzeichnet, dass die Endverfestigung mit zumindest einer Kalanderwalze durchgeführt wird, die eine Gravur "open dot" aufweist. Dabei zeichnet sich die Gravur "open dot" durch eine Prägefläche bzw. Pressfläche von 8 bis 15 %, insbesondere von 10 bis 14 % und bevorzugt von 11 bis 13 % aus. Empfohlenermaßen liegt die Figurendichte der Kalanderwalze für die Endverfestigung unter 35 Figuren pro cm², insbesondere unter 30 Figuren pro cm² und beträgt vorzugsweise 18 bis 28 Figuren pro cm² und bevorzugt 20 bis 28 Figuren pro cm². Zweckmäßigerweise beträgt die Fläche einer Figur 0,25 bis 0,75 mm², insbesondere 0,3 bis 0,7 mm², wobei kompakte Figuren (Kreise, Rauten oder Ellipsen mit einem Längen-/Breitenverhältnis unter 2) bevorzugt sind. Es empfiehlt sich, dass der Mittelpunktsabstand zweier Figuren der Kalanderwalze zwischen 0,9 und 2,5 mm, insbesondere zwischen 1 und 2 mm liegt. Vorzugsweise beträgt die Gravurtiefe der Kalanderwalze 0,4 bis 1,0 mm, insbesondere 0,5 bis 0,9 mm.

Es liegt weiterhin im Rahmen der Erfindung, dass die Deckung bzw. Opazität des erfindungsgemäßen Spinnvlieslaminates durch den Zusatz von Farbe verbessert wird. Dazu wird zweckmäßigerweise die Farbe gleichmäßig in allen Lagen des Laminates eindosiert. Es liegt auch im Rahmen der Erfindung, dass Farbe nur in spezielle Vlieslagen eindosiert wird. Dabei erfolgt die Farbdosierung zweckmäßigerweise in Vlieslagen mit gleichmäßigerer Ablage, sodass die optische Gleichmäßigkeit für einen gegebenen Farbanteil optimiert werden kann. Die Farbe kann insbesondere in Vlieslagen mit geringerer Kräuselung der Filamente oder in Vlieslagen ohne Kräuselung der Filamente eingebracht werden oder auch in Vlieslagen mit höherer Flächenmasse. Grundsätzlich kommen auch Lagen mit feineren Filamenten infrage.

Die erfindungsgemäße Definition der spezifischen Dichte $\varrho$ des Spinnvlieslaminates unterhalb der Grenzdichte $\varrho_G$ bezieht sich auf den Herstellungszustand des erfindungsgemäßen Spinnvlieslaminates. Das Spinnvlieslaminat wird normalerweise aber in der Verarbeitungskette zwischen seiner Herstellung, der Weiterverarbeitung und Abpackung des fertigen Endproduktes eine auf das Spinnvlieslaminat einwirkende Kompression in Dickenrichtung erfahren. Es liegt im Rahmen der Erfindung, dass die Laminatdicke sich dann nur noch bis zu einem bestimmten Prozentsatz wieder zurück einstellt. Dieser prozentuale Anteil der Dicke des Spinnvlieslaminates, der sich nach der Einwirkung einer Kompression gegenüber der ursprünglichen Laminatdicke nicht zurückstellt, wird als Druckverformungsrest bezeichnet und stellt eine bleibende Verformung des Spinnvlieslaminates dar. Es liegt im Rahmen der Erfindung, dass das erfindungsgemäße Spinnvlieslaminat einen maximalen Druckverformungsrest von 30 %, insbesondere von 20 % und bevorzugt von 10 % aufweist, sodass die spezifische Dichte $\varrho$ des Spinnvlieses - insbesondere im Gebrauchszustand des Endproduktes - maximal 30 %, insbesondere maximal 20 % und bevorzugt maximal 10 % oberhalb der Grenzdichte $\varrho_G$ liegt.

Zweckmäßigerweise wird der Druckverformungsrest des erfindungsgemäßen Laminates wie folgt bestimmt: Das Spinnvlieslaminat besitzt eine Ursprungsdicke $D_1$, die bei einem Andruck von 0,5 kPa gemessen wird. Anschließend wird das Spinnvlieslaminat über drei Tage mit 6 kPa belastet bzw. komprimiert und danach drei Tage ohne Belastung gelagert. Nach dieser Zeit wird die Dicke $D_2$ gemessen. Der Druckverformungsrest (DVR) berechnet sich dann wie folgt: DVR = $(D_1 - D_2)/D_1$. Die Messung wird für mindestens fünf Proben wiederholt und dann wird der Mittelwert als DVR ermittelt.

Vorzugsweise wird die Dichte $\varrho$ eines erfindungsgemäßen Spinnvlieslaminates wie folgt ermittelt: Der Anteil Luft zwischen den Filamenten des Laminates wird vernachlässigt. Die Dichte ergibt sich dann aus dem Quotienten Flächenmasse des Laminates/Dicke des Laminates. Die Dichte eines Spinnvlieses mit einer Flächenmasse von 50 g/m² und 0,2 mm Dicke beträgt dann also 50/0,2 = 0,25 g/cm³.

Es liegt im Rahmen der Erfindung, dass die in dem erfindungsgemäßen Spinnvlieslaminat eingesetzten Spinnvliese und insbesondere auch die zumindest eine Spinnvlieslage mit gekräuselten Endlosfilamenten durch ein Spunbond-Verfahren hergestellt wird. Nachfolgend wird ein bevorzugtes Spunbond-Verfahren für die Spinnvliese des erfindungsgemäßen Spinnvlieslaminates beschrieben. Die Endlosfilamente für ein Spinnvlies bzw. für eine Spinnvlieslage werden mittels einer Spinndüse bzw. Spinnerette ersponnen und anschließend in einer Kühlvorrichtung mit einer Kühlkammer gekühlt. Es liegt im Rahmen der Erfindung, dass zwischen der Spinndüse und der Kühlvorrichtung eine Monomer-Absaugungseinrichtung angeordnet ist, mit der beim Spinnprozess auftretende störende Gase aus der Vorrichtung entfernt werden können. Nach Durchlaufen der Kühlvorrichtung werden die Filamente zweckmäßigerweise durch eine Verstreckvorrichtung zum Verstrecken der Endlosfilamente geführt. Empfohlenermaßen weist die Verstreckvorrichtung einen Zwischenkanal auf, der die Kühlvorrichtung mit einem Verstreckschacht der Verstreckvorrichtung verbindet. Nach besonders bevorzugter Ausführungsform der Erfindung ist das Aggregat aus der Kühlvorrichtung und der Verstreckvorrichtung bzw. das Aggregat aus der Kühlvorrichtung, dem Zwischenkanal und dem Verstreckschacht als geschlossenes Aggregat ausgebildet und außer der Zufuhr von Kühlluft in der Kühlvorrichtung erfolgt keine weitere Luftzufuhr von außen in dieses Aggregat.

Bevorzugt schließt in Filamentströmungsrichtung an die Verstreckvorrichtung zumindest ein Diffusor an, durch den die Endlosfilamente geführt werden. Zweckmäßigerweise werden die Endlosfilamente nach Durchlaufen des zumindest einen Diffusors auf einer Ablagevorrichtung abgelegt, die vorzugsweise als Ablagesiebband ausgebildet ist. Das Ablagesiebband ist empfohlenermaßen ein endlos umlaufendes Ablagesiebband. Zweckmäßigerweise ist das Ablagesiebband luftdurchlässig ausgebildet, sodass eine Absaugung von Prozessluft von unten durch das Ablagesiebband möglich ist. Zweckmäßigerweise ist für das Absaugen der Prozessluft unter dem Ablagesiebband zumindest eine Absaugvorrichtung vorgesehen.

Der Erfindung liegt die Erkenntnis zugrunde, dass bei einem erfindungsgemäßen Spinnvlieslaminat eine hohe Dicke und eine hohe Weichheit erzielbar ist bei nichtsdestoweniger ausreichend hoher Festigkeit und Dimensionsstabilität des Laminates. Zudem zeichnet sich die Filamentablage durch eine zufriedenstellende Qualität und eine ausreichende Homogenität aus. Mit dem erfindungsgemäßen Verfahren kann im Vergleich zu aus dem Stand der Technik bekannten Verfahren bei quasi gleichem Materialeinsatz eine höhere Dicke und eine höhere Weichheit erzielt werden, wobei die Laminate ausreichend fest und dimensionsstabil sind. Hervorzuheben ist, dass die erfindungsgemäßen Vorteile durch relativ einfache Maßnahmen und somit mit verhältnismäßig geringen Kosten erreichbar sind.

**Ausführungsbeispiele:**

Die in den nachfolgenden Ausführungsbeispielen eingesetzten Kunststoffe bzw. Polymere werden in der nachstehenden Tabelle 1 genauer spezifiziert. Hier sind die einzelnen Polymere mit den Buchstaben A bis G gekennzeichnet, die in den Ausführungsbeispielen benutzt werden. Neben dem Herstellernamen und dem Polymertyp ist in der vierten Spalte die Schmelzflussrate MFR des Polymers in g/10 min angegeben sowie in der fünften Spalte der Schmelzpunkt TM in Grad Celsius. In der sechsten Spalte ist das Zahlenmittel der Molmasse $M_n$ angegeben und in der siebten Spalte das Massenmittel der Molmasse $M_w$. Die achte Spalte betrifft das Zentrifugenmittel der Molmasse $M_z$ und die neunte Spalte gibt den Polydispersitätsindex PI = $M_w/M_n$ an. Der Quotient $M_w/M_z$ der mittleren Molmassen findet sich in der letzten Spalte. Die Polymere A bis G werden in den nachfolgenden Ausführungsbeispielen eingesetzt.

Tabelle 1:

| Polymer | Herstellername | Typ | MFR g/10 min | TM °C | $M_n$ | $M_w$ | $M_z$ | $M_w/M_n$ (PI) | $M_w/M_z$ |
|---|---|---|---|---|---|---|---|---|---|
| A | Moplen HP562T | Homopolypropylen | 55 | 160 | 28000 | 152200 | 320100 | 5,4 | 2,1 |
| B | Exxon PP3155E5 | Homopolypropylen | 35 | 159 | 30150 | 148500 | 307500 | 4,93 | 2,07 |
| C | Borealis HG475FB | Homopolypropylen | 27 | 158 | 35800 | 166000 | 344000 | 4,6 | 2,07 |
| D | Moplen RP248R | Polypropylen-Copolymer | 30 | 144 | 33600 | 152500 | 308000 | 4,54 | 2,02 |
| E | Moplen RP3386 | Polypropylen-Copolymer | 30 | 144 | 33600 | 152500 | 308000 | 4,54 | 2,02 |
| F | Moplen RP348R | Polypropylen-Copolymer | 25 | 148 | 28900 | 194750 | 569000 | 6,7 | 2,9 |
| G | Sabic PP511A | Homopolypropylen | 25 | 161 | 36500 | 163500 | 340500 | 4,9 | 2,08 |

Die folgenden Tabellen 2 bis 4 betreffen für die Erfindung geeignete Bikomponentenfilamente mit den beiden Komponenten 1 und 2 auf Basis von Polypropylenen. Die Abkürzung PP meint hier ein Homopolypropylen und die Abkürzung CoPP ein Polypropylen-Copolymer. Wenn unterschiedliche Ziffern (1, 2 oder 3) angehängt sind, wird dadurch gekennzeichnet, dass es sich um unterschiedliche Homopolypropylene oder unterschiedliche Polypropylen-Copolymere handelt. PP1 und PP2 sind also beispielsweise zwei unterschiedliche Homopolypropylene. Die Homopolypropylene und Polypropylen-Copolymere wurden dabei aus der obigen Tabelle 1 ausgewählt.

Für die Zuordnung der beiden Komponenten 1 und 2 der Bikomponentenfilamente in den nachfolgenden Tabellen 2 bis 4 ist Folgendes anzumerken: Bei Kombinationen von Homopolypropylenen für die Komponenten 1 und 2 ist die Komponente mit der engeren Molekulargewichtsverteilung (bzw. mit dem kleineren Polydispersitätsindex PI) die Komponente 1. Bei Kombinationen von Homopolypropylenen mit Polypropylen-Copolymeren (CoPP) ist das Homopolypropylen die Komponente 1 und das Propylen-Copolymer die Komponente 2. Im Falle von Kombinationen von Polypropylen-Copolymeren (CoPP/CoPP) ist die Komponente 2 die Komponente mit der breiteren Molekulargewichtsverteilung (mit dem höheren Polydispersitätsindex PI).

Bikomponentenfilamente mit Seite-an-Seite-Konfiguration (S/S): nicht erfindungsgemäß

Die Bikomponentenfilamente der Tabelle 2 mit S/S-Konfiguration weisen einen Standardtiter von 1,5 bis 2,0 denier auf. Für die Komponenten 1 und 2 ist hier in der dritten Spalte der Quotient der Schmelzflussrate der Komponente 1 durch die Schmelzflussrate der Komponente 2 angegeben. In der vierten Spalte ist der Quotient des Polidispersitätsindex PI der Komponente 2 zum Polydispersitätsindex PI der Komponente 1 aufgeführt. In der fünften Spalte ist die absolute Differenz zwischen der Schmelztemperatur der Komponente 1 und der Schmelztemperatur der Komponente 2 angegeben.

Tabelle 2:

| Komponente | | MFR 1/2 | PI 2/1 | $\Delta T_m$ 1 -2 |
|---|---|---|---|---|
| 1 | 2 | | | |
| PP1 | PP1 + PP2 | 1.2 - 1.4 | 1.1 -1.3 | < 5 °C |
| PP1 | PP2 + PP3 | 1.2 - 1.4 | 1.1 - 1.3 | < 5 °C |
| PP1 | CoPP1 / CoPP1 + CoPP2 | 0.9-1.2 | 1.1 -1.3 | 10 -15 °C |
| PP1 | CoPP1 + PP1 / CoPP1 + PP2 | 1.0-1.2 | 1.1 - 1.3 | 5 -15 °C |

Bikomponentenfilamente mit exzentrischer Kern-Mantel-Konfiguration (eC/S):

Die nachfolgende Tabelle 3 führt Mischungen und Parameter für erfindungsgemäße Bikomponentenfilamente mit eC/S-Konfiguration mit einem Standardtiter größer 1,5 denier auf.

Tabelle 3:

| Komponente | | MFR 1/2 | PI 2/1 | $\Delta T_m$ 1 -2 |
|---|---|---|---|---|
| 1 | 2 | | | |
| PP1 | PP1 + PP2 | 0.9 - 1.5 | 1.1 -1.4 | < 5 °C |
| PP1 | PP2 + PP3 | 0.9 - 1.5 | 1.1 - 1.4 | |
| PP1 | CoPP1 | 0.9 - 1.5 | 1.1 - 1.4 | 10 - 15 °C |
| PP1 | CoPP1 + PP1 | 0.9 - 1.5 | 1.2 - 1.4 | 5 - 10 °C |
| PP1 | CoPP1 + PP2 | 0.9 - 1.5 | 1.2 - 1.4 | 5 - 10 °C |
| PP1 | CoPP1 + CoPP2 | 0.9 - 1.5 | 1.2 - 1.4 | 10 - 15°C |

Die folgende Tabelle 4 betrifft erfindungsgemäße Bikomponentenfilamente mit exzentrischer Kern-Mantel-Konfiguration mit einem Feintiter kleiner 1,5 denier.

Tabelle 4:

| Komponente | | MFR 1/2 | PI 2/1 | $\Delta T_m$ 1 -2 |
| 1 | 2 | | | |
|---|---|---|---|---|
| PP1 | CoPP1 + PP2 | 1.5 - 2.2 | 1 - 1.2 | 5 - 10 °C |
| PP1 | CoPP1 | 1.5 - 2.2 | 1 - 1.2 | 5 - 15 °C |
| PP1 | CoPP1 + CoPP2 | 1.5 - 2.2 | 1 - 1.2 | 5 - 15 °C |
| PP1 | PP1 +PP2 | 1.5 - 2.2 | 1 - 1.2 | 0 - 5 °C |

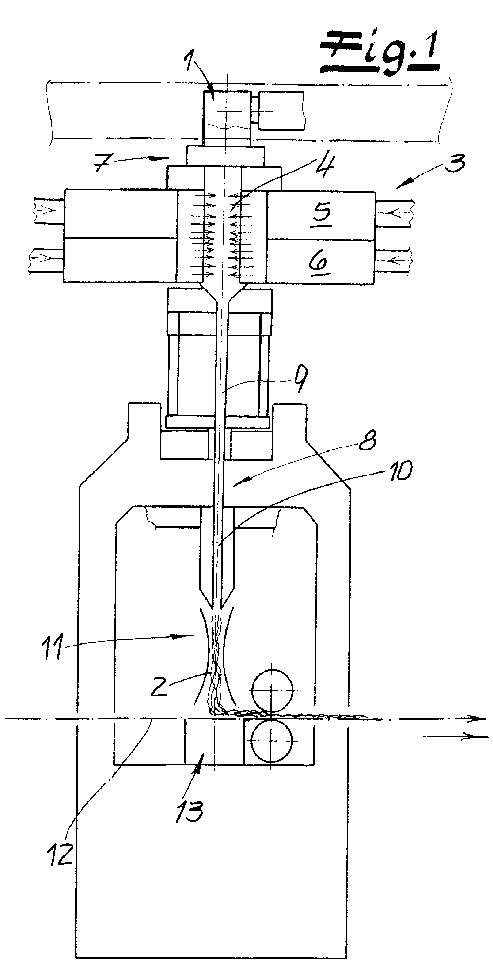

In den anschließenden Tabellen 5 und 6 werden die Rohstoffe und die Parameter bzw. Einstellungen für die Erzeugung von dreilagigen Spinnvlieslaminaten angegeben. Dabei wird jedes Laminat mit einer Drei-Balken-Anlage mit den Balken 1, 2 und 3 erzeugt. Vorzugsweise entspricht jeder Balken einer in der Fig. 1 dargestellten Vorrichtung zur Herstellung von Spunbond-Vliesen. Fast alle Vlieslagen der dreilagigen Spinnvlieslaminate weisen gekräuselte Bikomponentenfilamente mit den Komponenten 1 und 2 auf. Lediglich die mittlere bzw. zweite Vlieslage der Muster 5 und 12 weist Monokomponentenfilamente auf. In der zweiten Zeile der nachfolgenden Tabellen werden zu den Mustern jeweils die Rohstoffkombinationen bzw. Polymerkombinationen angegeben. Die Rohstoffe A bis G sind in der Tabelle 1 zu finden. In der dritten Zeile der folgenden Tabellen wird zu den Mustern jeweils das Massenverhältnis der beiden Komponenten zueinander angegeben. Die vierte Zeile spezifiziert den Kabinendruck in der Kühlkammer der für die Spinnvlieslage jeweils eingesetzten Spinnvliesvorrichtung. Die letzte Zeile gibt zu den Mustern den Polymerdurchsatz in der Anlage in kg/h/m an. - Für die Erzeugung der Vlieslagen bzw. der entsprechenden Filamente wurden jeweils Spinndüsen mit 6.800 Kapillaren/m eingesetzt. Die dreilagigen Laminate wurden jeweils mit einer Kalanderwalze mit einer Gravur "open dot" endverfestigt.

In Tabelle 5 werden acht Laminatmuster von dreilagigen Spinnvlieslaminaten nach dem Stand der Technik spezifiziert. - Jede Lage der dreilagigen Laminatmuster 1 bis 4 weist gekräuselte Bikomponentenfilamente in Seite-an-Seite-Konfiguration auf und zwar mit einem Titer von 1,2 denier. Bei diesen Mustern 1 bis 4 wurde das Polymer jeder Komponente der Bikomponentenfilamente mit 5 Gew.-% Spinnhilfe versehen. Als Spinnhilfe wurde hier ein Ziegler-Natta-Homopolypropylen mit einer Schmelzflussrate von 1.200 g/10 min und einer Schmelztemperatur von 158 °C eingesetzt.

Die Laminatmuster 5 bis 8 weisen Filamente mit einem Titer von 1,7 denier auf.

Fast alle Lagen weisen gekräuselte Bikomponentenfilamente mit Seite-an-Seite-Konfiguration auf. Lediglich die zweite bzw. mittlere Lage des Musters 5 weist Monokomponentenfilamente ohne Kräuselung auf und die erste Lage des Musters 8 weist Bikomponentenfilamente mit Kern-Mantel-Konfiguration ohne Kräuselung auf.

Tabelle 5: nicht erfindungsgemäß

| Muster: 1 | Balken 1 | 2 | 3 |
|---|---|---|---|
| Rohstoffe | G/D | G/D | G/D |
| Massenverhältnis | 70:30 | 50:50 | 60:40 |
| Kabinendruck | 5800 | 6200 | 5600 |
| Durchsatz kg/h/m | 150 | 150 | 150 |

| Muster: 2 | Balken 1 | 2 | 3 |
|---|---|---|---|
| Rohstoffe | C/E | C/E | C/E |
| Massenverhältnis | 50:50 | 50:50 | 50:50 |
| Kabinendruck | 6500 | 6500 | 6500 |
| Durchsatz kg/h/m | 155 | 155 | 155 |

| Muster: 3 | Balken 1 | 2 | 3 |
|---|---|---|---|
| Rohstoffe | C/E | C/E | C/E |
| Massenverhältnis | 50:50 | 50:50 | 50:50 |
| Kabinendruck | 6500 | 6500 | 6500 |
| Durchsatz kg/h/m | 155 | 155 | 155 |

| Muster: 4 | Balken 1 | 2 | 3 |
|---|---|---|---|
| Rohstoffe | C/E | C/E | C/E |
| Massenverhältnis | 50:50 | 50:50 | 50:50 |
| Kabinendruck | 6500 | 6500 | 6500 |
| Durchsatz kg/h/m | 155 | 155 | 155 |

| Muster: 5 | Balken 1 | 2 | 3 |
|---|---|---|---|
| Rohstoffe | C/D | | C/D |
| Massenverhältnis | 80:20 | Mono - keine Kräuselung | 70:30 |
| Kabinendruck | 3800 | 4200 | 3800 |
| Durchsatz kg/h/m | 200 | 200 | 200 |

| Muster: 6 | Balken 1 | 2 | 3 |
|---|---|---|---|
| Rohstoffe | G/D | G/D | G/D |
| Massenverhältnis | 90:10 | 60:40 | 50:50 |
| Kabinendruck | 4000 | 4000 | 3800 |
| Durchsatz kg/h/m | 205 | 205 | 205 |

| Muster: 7 | Balken 1 | 2 | 3 |
|---|---|---|---|
| Rohstoffe | C/D | C/D | C/D |
| Massenverhältnis | 70:30 | 60:40 | 50:50 |
| Kabinendruck | 4500 | 4500 | 4000 |
| Durchsatz kg/h/m | 250 | 250 | 250 |

| Muster: 8 | Balken 1 | 2 | 3 |
|---|---|---|---|
| Rohstoffe | G/D | G/D | G/D |
| Massenverhältnis | 70:30 keine Kräuselung | 70:30 | 70:30 |
| Kabinendruck | 3800 | 4000 | 3800 |
| Durchsatz kg/h/m | 200 | 200 | 200 |

In der nachfolgenden Tabelle 6 werden vier erfindungsgemäße Laminatmuster (Muster 9 bis Muster 12) von dreilagigen Spinnvlieslaminaten spezifiziert. Jede Lage der dreilagigen Spinnvlieslaminate weist gekräuselte Bikomponentenfilamente in exzentrischer Kern-Mantel-Konfiguration auf. Lediglich die mittlere bzw. zweite Lage des Musters 12 weist Monokomponentenfilamente ohne Kräuselung auf. Die Filamente der Muster 9 und 10 weisen einen Titer von 1,7 denier auf, die Filamente des Musters 11 einen Titer von 1,35 denier und die Filamente des Musters 12 einen Titer von 1,3 denier. Bei den jeweils in der zweiten Zeile angegebenen Rohstoffen bildet der erste angegebene Rohstoff die Kernkomponente und die danach angegebene Rohstoffmischung die Mantelkomponente der Bikomponentenfilamente. Das in der dritten Zeile jeweils angegebene Massenverhältnis bezieht sich auf das Massenverhältnis Kern:Mantel. Das in der vierten Zeile angegebene Massenverhältnis betrifft das Massenverhältnis der Bestandteile der Polymermischung in der Mantelkomponente.

Tabelle 6:

| Muster: 9 | Balken 1 | 2 | 3 |
|---|---|---|---|
| Rohstoffe | B/D + C | B/D + C | B/D + C |
| Massenverhältnis | 85:15 | 80:20 | 70:30 |
| Massenverhältnis D:C | 70:30 | 80:20 | 80:20 |
| Kabinendruck | 4000 | 4000 | 3800 |
| Durchsatz kg/h/m | 215 | 215 | 215 |

| Muster: 10 | Balken 1 | 2 | 3 |
|---|---|---|---|
| Rohstoffe | B/D + C | B/D + C | B/D + C |
| Massenverhältnis | 90:10 | 85:15 | 80:20 |
| Massenverhältnis D:C | 60:40 | 70:30 | 80:20 |
| Kabinendruck | 4000 | 4000 | 3800 |
| Durchsatz kg/h/m | 215 | 215 | 215 |

| Muster: 11 | Balken 1 | 2 | 3 |
|---|---|---|---|
| Rohstoffe | A/D + C | A/D + C | A/D + C |
| Massenverhältnis | 90:10 | 70:30 | 70:30 |
| Massenverhältnis D:C | 60:40 | 75:25 | 75:25 |
| Kabinendruck | 4000 | 5800 | 5500 |
| Durchsatz kg/h/m | 200 | 200 | 200 |

| Muster: 12 | Balken 1 | 2 | 3 |
|---|---|---|---|
| Rohstoffe | A/D + C | nur A | A/D + C |
| Massenverhältnis | 70:30 | | 70:30 |
| Massenverhältnis D:C | 50:50 | | 75:25 |
| Kabinendruck | 5500 | 5800 | 5500 |
| Durchsatz kg/h/m | 200 | 200 | 200 |

Die nachfolgende Tabelle 7 stellt die wesentlichen Parameter für die Vlieslaminate aller Muster 1 bis 12 zusammen, wobei es sich - wie oben bereits ausgeführt - bei den Mustern 1 bis 8 um nach dem Stand der Technik hergestellte Muster handelt und bei den Mustern 9 bis 12 um nach der erfindungsgemäßen Lehre hergestellte Muster. In der zweiten Spalte wird das Flächengewicht der Vlieslaminate angegeben und in der dritten Spalte die Liniengeschwindigkeit bzw. Produktionsgeschwindigkeit. Die vierte Spalte gibt die Dichte der Vlieslaminate in g/cm$^3$ an. Die letzte Spalte führt den Titer der Filamente der Laminate in denier auf.

Tabelle 7:

| Muster | Flächengewicht (g/m$^2$) | Liniengeschw. (m/min) | Dichte (g/cm$^3$) | Titer (denier) |
|---|---|---|---|---|
| 1 | 25 | 345 | 0,071 | 1,2 |
| 2 | 16,3 | 508 | 0,065 | 1,2 |
| 3 | 18,4 | 450 | 0,068 | 1,2 |
| 4 | 25,5 | 325 | 0,077 | 1,2 |
| 5 | 24,6 | 402 | 0,065 | 1,7 |
| 6 | 14,1 | 735 | 0,052 | 1,7 |
| 7 | 20,3 | 590 | 0,06 | 1,7 |
| 8 | 12,9 | 830 | 0,056 | 1,7 |
| 9 | 23,5 | 450 | 0,053 | 1,7 |
| 10 | 20 | 550 | 0,057 | 1,7 |
| 11 | 20,3 | 500 | 0,053 | 1,35 |
| 12 | 17 | 590 | 0,047 | 1,3 |

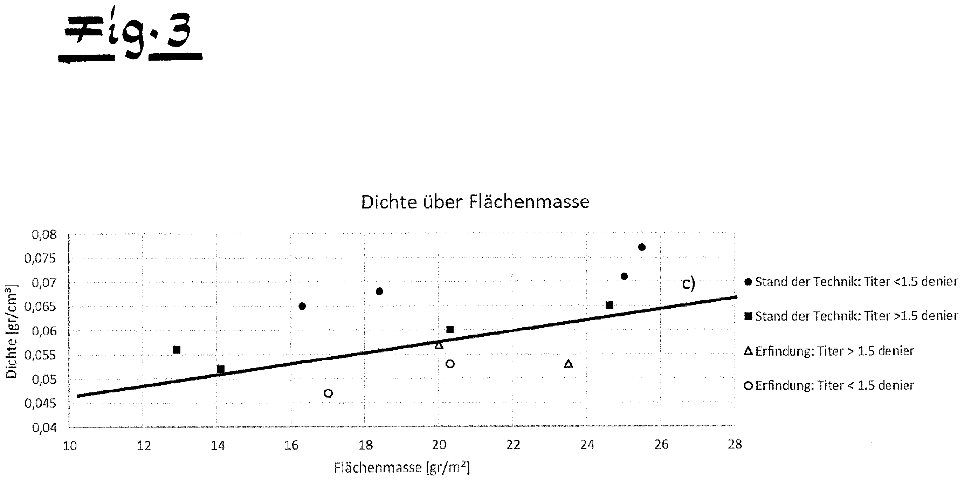

In der Fig. 3 ist für die Muster 1 bis 12 ein Diagramm dargestellt, in dem die Dichte (g/cm$^3$) des gesamten Spinnvlieslaminates gegen die Flächenmasse (g/m$^2$) des gesamten Laminates aufgetragen ist. Die den Stand der Technik betreffenden Muster 1 bis 8 zeigen Messpunkte oberhalb der erfindungsgemäßen Geraden, die die Grenzdichte $\varrho_G$ symbolisiert. Die Parameterwerte der erfindungsgemäßen Muster 9 bis 12 liegen unterhalb der Geraden bzw. unterhalb der Grenzdichte. Diese Spinnvlieslaminate zeichnen sich durch die erfindungsgemäßen Vorteile aus, die nachfolgend noch erläutert werden.

In der folgenden Tabelle 8 ist für die erste Vlieslage der Vlieslaminate gemäß der Muster 1 bis 12 der Quotient der Schmelzflussrate von Komponente 1 zu Komponente 2 aufgeführt sowie der Quotient des Polydispersitätsindex der Komponente 2 zur Komponente 1.

Tabelle 8:

| Muster | PI-Quotient 2/1 | MFI-Quotient 1/2 |
|---|---|---|
| 1 | 1.0 | 0.83 |
| 2 | 1.07 | 0.9 |
| 3 | 1.07 | 0.9 |
| 4 | 1.07 | 0.9 |
| 5 | 1.07 | 0.9 |
| 6 | 1.0 | 0.83 |
| 7 | 1.07 | 0.9 |

| Muster | PI-Quotient 2/1 | MFI-Quotient 1/2 |
|---|---|---|
| 8 | keine Kräuselung | keine Kräuselung |
| 9 | 1.24 | 1.37 |
| 10 | 1.2 | 1.36 |

(fortgesetzt)

| Muster | PI-Quotient 2/1 | MFI-Quotient 1/2 |
|---|---|---|
| 11 | 1.09 | 2.13 |
| 12 | 1.05 | 2.12 |

In der folgenden Tabelle 9 ist für die drei Vlieslagen der Vlieslaminate gemäß der Muster 1 bis 12 der Quotient der Schmelzflussrate von Komponente 1 zu Komponente 2 aufgeführt, sowie der Quotient des Polydispersitätsindex der Komponente 2 zur Komponente 1.

Tabelle 9:

| Muster | Flächengewicht (g/m$^2$) | Liniengeschw. (m/min) | Dichte (g/cm$^3$) | PI-Quotient 2/1 | MFI-Quotient 1/2 |
|---|---|---|---|---|---|
| 1 | 25 | 345 | 0,071 | 1 / 1 11 | 0.83 / 0.83 / 0.83 |
| 2 | 16,3 | 508 | 0,065 | 1.07 / 1.07 / 1.07 | 0.9 / 0.9 / 0.9 |
| 3 | 18,4 | 450 | 0,068 | 1.07 / 1.07 / 1.07 | 0.9 / 0.9 / 0.9 |
| 4 | 25,5 | 325 | 0,077 | 1.07 / 1.07 / 1.07 | 0.9 / 0.9 / 0.9 |
| 5 | 24,6 | 402 | 0,065 | 1.07 / keine Kräuselung / 1.07 | 0.9 / keine Kräuselung / 0.9 |
| 6 | 14,1 | 735 | 0,052 | 1 / 1 / 1 | 0.83 / 0.83 / 0.83 |

| Muster | Flächengewicht (g/m$^2$) | Liniengeschw. (m/min) | Dichte (g/cm$^3$) | PI-Quotient 2/1 | MFI-Quotient 1/2 |
|---|---|---|---|---|---|
| 7 | 20,3 | 590 | 0,06 | 1.07 / 1.07 / 1.07 | 0.9 / 0.9 / 0.9 |
| 8 | 12,9 | 830 | 0,056 | keine Kräuselung / 1 / 1 | keine Kräuselung / 0.83 / 0.83 |
| 9 | 23,5 | 450 | 0,053 | 1.24 / 1.28 / 1.28 | 1.37 / 1.38 / 1.38 |
| 10 | 20 | 550 | 0,057 | 1.2 / 1.24 / 1.28 | 1.36 / 1.37 / 1.38 |
| 11 | 20,3 | 500 | 0,053 | 1.09 / 1.14 / 1.14 | 2.13 / 2.16 / 2.16 |
| 12 | 17 | 590 | 0,047 | 1.05 / keine Kräuselung / 1.14 | 2.12 / keine Kräuselung / 2.16 |

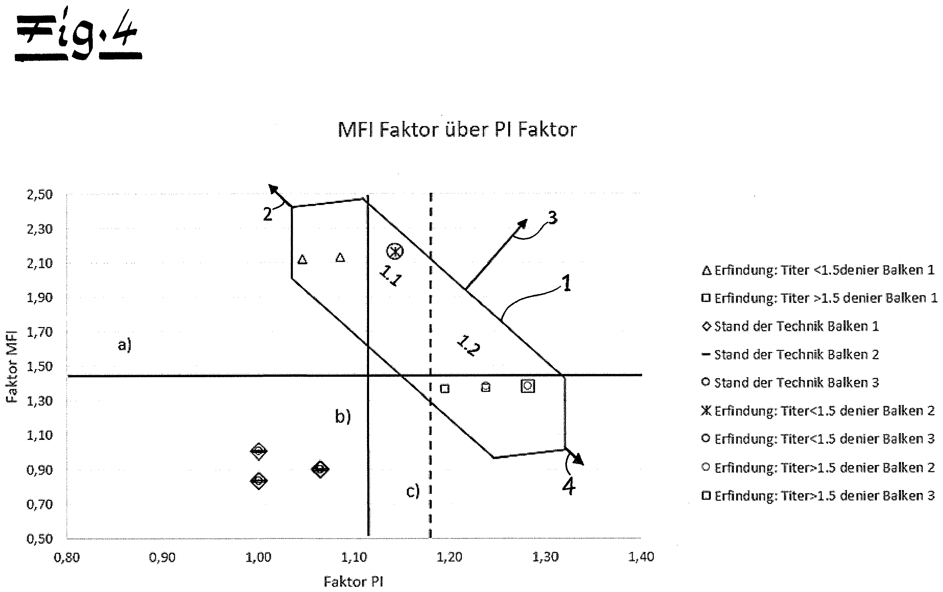

In der die Tabellen 8 und 9 betreffenden Fig. 4 ist für die Rohstoffe der Spinnvlieslaminate bzw. der Vlieslagen der Quotient aus der Schmelzflussrate der Komponente 1 zur Schmelzflussrate der Komponente 2 gegen den Quotienten aus dem Polydispersitätsindex der Komponente 2 und dem Polydispersitätsindex der Komponente 1 aufgetragen. Dabei entsprechen in dem Diagramm die Parameterpunkte in dem eingerahmten Flächenbereich erfindungsgemäßen Bikomponentenfilamenten (Muster 9 bis 12). Die Parameterpunkte links unterhalb der horizontalen Geraden entsprechen dagegen Bikomponentenfilamenten nach dem Stand der Technik (Muster 1 bis 8). Im Stand der Technik wird davon ausgegangen, dass für MFR-Quotienten oberhalb der horizontalen Linie die Spinnstabilität zunehmend schlechter wird. Weiterhin wird für die erste Lage davon ausgegangen, dass für Quotienten des Polydispersitätsindex rechts von der vertikalen durchgezogenen Geraden b) durch relativ starke Kräuselung dicke Vlieslagen erzielt werden können, bei denen der Grad der Kräuselung aber die Dimensionsstabilität und damit auch die Maschinengängigkeit gefährden kann. Für die nachfolgenden Balken 2 und 3 beginnt der Bereich, in dem eine zu starke Kräuselung die Ablagequalität gefährden kann, rechts von der vertikalen gestrichelten Geraden c) in der Fig. 4.

In dem erfindungsgemäßen eingerahmten Bereich können demgegenüber bei guter Spinnstabilität feine Filamente mit einer guten Kräuselung gesponnen werden, die in der Ablage ein Spinnvlieslaminat mit verbesserter Dicke und erfindungsgemäßer Dichte ermöglichen. Der Erfindung liegt die Erkenntnis zugrunde, dass insbesondere der Bereich 1.1 gegenüber dem Bereich 1.2 zu bevorzugen ist, da dort leichter feinere Filamente mit guter Dichte des Laminates erzielt werden können (siehe auch Diagramm gemäß Fig. 3).

In der in dem Diagramm der Fig. 4 gekennzeichneten Richtung 2 wird eine allmähliche Verschlechterung der Spinnstabilität durch zu niedrige Viskositäten (zu niedrige Molmassengewichte der Polypropylene) und damit eine Verschlechterung der Festigkeiten der Vlieslaminate beobachtet. - In der in dem Diagramm gemäß Fig. 4 gekennzeichneten Richtung 3 geht die Spinnstabilität durch die Kombination aus zu breiten Molmassenverteilungen und zu großen Viskositätsunterschieden verloren und es sind deshalb keine feinen Filamente bzw. keine Filamente mit kleinen Titern möglich. - Schließlich sind in der im Diagramm gemäß Fig. 4 gekennzeichneten Richtung 4 keine feinen Filamente spinnbar, obwohl durch den größeren Quotienten des Polydispersitätsindex höhere Dichten erzielt werden können. Durch die relativ starke Kräuselung entstehen ungleichmäßige und empfindliche Filamentablagen. Filamente mit zu hoher Kräuselung befinden sich immer in der Gefahr, im Ablagebereich durch horizontale Luftbewegungen verschoben zu werden. Durch die relativ hohen Titerwerte ist dieser Effekt hier besonders ausgeprägt und nicht kontrollierbar. Dazu steht im Gegensatz der erfindungsgemäße Bereich 1.1 mit kleineren Titerwerten und einem stabileren Netzwerk der Filamentablage.

Nachfolgend wird die Erfindung anhand einer lediglich ein Ausführungsbeispiel darstellenden Zeichnung näher erläutert. Es zeigen in schematischer Darstellung:

Fig. 1   einen Vertikalschnitt durch eine Vorrichtung zur Erzeugung einer Spinnvlieslage eines erfindungsgemäßen Spinnvlieslamiantes,

Fig. 2   einen Querschnitt durch ein bevorzugtes Endlosfilament mit exzentrischer Kern-Mantel-Konfiguration und

Fig. 3   das Diagramm Dichte gegen Flächenmasse,

Fig. 4   das Diagramm des Schmelzflussratequotienten gegen den Polydispersitätsindexquotienten.

Die Fig. 1 zeigt eine Vorrichtung zur Erzeugung einer Spinnvlieslage für das erfindungsgemäße Spinnvlieslaminat nach dem Spunbond-Verfahren. Mit dieser Vorrichtung bzw. mit diesem Verfahren wird vorzugsweise auch die zumindest eine Spinnvlieslage mit gekräuselten Endlosfilamenten für das Spinnvlieslaminat hergestellt. Die Vorrichtung weist eine Spinnerette 1 zum Erspinnen von Endlosfilamenten 2 für eine Spinnvlieslage des erfindungsgemäßen Spinnvlieslaminates auf. Die von der Spinnerette 1 ersponnenen Endlosfilamente 2 werden in eine Kühlvorrichtung 3 mit einer Kühlkammer 4 eingeführt. Vorzugsweise und im Ausführungsbeispiel sind an zwei gegenüberliegenden Seiten der Kühlkammer 4 übereinander angeordnete Luftzufuhrkabinen 5, 6 angeordnet. Aus den übereinander angeordneten Luftzufuhrkabinen 5, 6 wird zweckmäßigerweise Luft unterschiedlicher Temperatur in die Kühlkammer 4 eingeführt. Bevorzugt und im Ausführungsbeispiel ist zwischen der Spinnerette 1 und der Kühlvorrichtung 3 eine Monomer-Absaugungseinrichtung 7 angeordnet. Mit dieser Monomer-Absaugungseinrichtung 7 können beim Spinnprozess auftretende störende Gase aus der Vorrichtung entfernt werden.

Empfohlenermaßen und im Ausführungsbeispiel ist der Kühlvorrichtung 3 in Filamentströmungsrichtung eine Verstreckvorrichtung 8 zum Verstrecken der Endlosfilamente 2 nachgeschaltet. Zweckmäßigerweise und im Ausführungsbeispiel weist die Verstreckvorrichtung 8 einen Zwischenkanal 9 auf, der die Kühlvorrichtung 3 mit einem Verstreckschacht 10 der Verstreckvorrichtung 8 verbindet. Bevorzugt und im Ausführungsbeispiel ist das Aggregat aus der Kühlvorrichtung 3 und der Verstreckvorrichtung 8 bzw. das Aggregat aus der Kühlvorrichtung 3, dem Zwischenkanal 9 und dem Verstreckschacht 10 als geschlossenes Aggregat ausgebildet und außer der Zufuhr von Kühlluft in der Kühlvorrichtung 3 erfolgt keine weitere Luftzufuhr von außen in dieses Aggregat.

Zweckmäßigerweise und im Ausführungsbeispiel schließt in Filamentströmungsrichtung an die Verstreckvorrichtung 8 ein Diffusor 11 an, durch den die Endlosfilamente 2 geführt werden. Nach Durchlaufen des Diffusors 11 werden die Endlosfilamente 2 vorzugsweise und im Ausführungsbeispiel auf einer als Ablagesiebband 12 ausgebildeten Ablagevorrichtung abgelegt. Das Ablagesiebband 12 ist zweckmäßigerweise und im Ausführungsbeispiel als endlos umlaufendes Ablagesiebband 12 ausgeführt. Es liegt im Rahmen der Erfindung, dass das Ablagesiebband 12 luftdurchlässig ist, sodass eine Absaugung von Prozessluft von unten durch das Ablagesiebband 12 möglich ist. Dazu ist zweckmäßigerweise und im Ausführungsbeispiel eine Absaugungseinrichtung 13 unterhalb des Ablagesiebbandes 12 angeordnet.

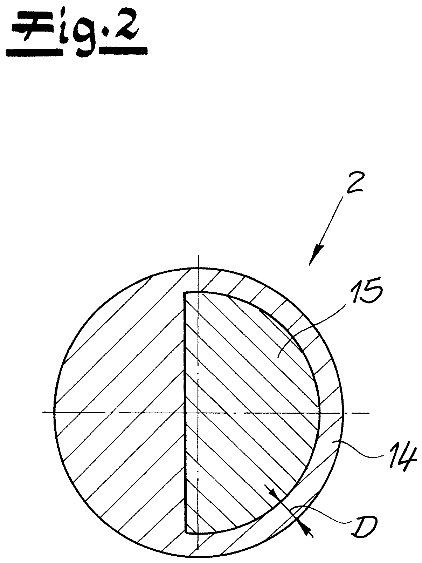

Die Fig. 2 zeigt einen Schnitt durch ein Endlosfilament 2 mit exzentrischer Kern-Mantel-Konfiguration. Solche Endlosfilamente 2 werden bevorzugt für eine Spinnvlieslage mit gekräuselten Endlosfilamenten in dem erfindungsgemäßen Spinnvlieslaminat eingesetzt. Es handelt sich um ein Bikomponentenfilament mit einer ersten Komponente auf Basis von Polypropylen im Mantel 14 und mit einer zweiten Komponente auf Basis von Polypropylen im Kern 15. In der Fig. 2 ist erkennbar, dass bei den bevorzugten Endlosfilamenten 2 der Mantel 14 der Filamente 2 im Filamentquerschnitt vorzugsweise und im Ausführungsbeispiel über mehr als 50 % des Filamentumfanges eine konstante Dicke D aufweist. Bevorzugt und im Ausführungsbeispiel ist der Kern 15 der Filamente 2 - im Filamentquerschnitt gesehen - kreissegmentförmig ausgebildet. Der Mantel 14 weist im Bereich seiner konstanten Dicke D vorzugsweise eine Dicke D von 0,1 bis 0,9 $\mu$m auf.

**Patentansprüche**

1. Spinnvlieslaminat mit mindestens zwei Spinnvlieslagen, wobei mindestens eine Spinnvlieslage gekräuselte Endlosfilamente aufweist bzw. aus gekräuselten Endlosfilamenten besteht bzw. im Wesentlichen besteht, wobei die gekräuselten Endlosfilamente Mehrkomponentenfilamente, insbesondere Bikomponentenfilamente mit einer ersten Komponente auf Basis von Polypropylen und einer zweiten Komponente auf Basis von Polypropylen sind, wobei die spezifische Dichte $\varrho$ [g/cm$^3$] des Spinnvlieslaminates in Abhängigkeit von der Flächenmasse des Spinnvlieslaminates unterhalb einer Grenzdichte $\varrho_G$ liegt, die durch die folgende Gleichung definiert ist:

$$\varrho_G = 9\,\frac{1}{cm} \times Fl\ddot{a}chenmasse\,\frac{g}{cm^2} + 0{,}0393\,\frac{g}{cm^3}$$

und wobei mindestens eine Spinnvlieslage gekräuselte Endlosfilamente mit Kern-Mantel-Konfiguration, bevorzugt mit exzentrischer Kern-Mantel-Konfiguration, aufweist.

2. Spinnvlieslaminat nach Anspruch 1, wobei die erste Komponente aus einer Polypropylen-Mischung besteht bzw. im Wesentlichen besteht oder aus einem Polypropylen-Copolymer besteht bzw. im Wesentlichen besteht.

3. Spinnvlieslaminat nach einem der Ansprüche 1 oder 2, wobei die zweite Komponente aus einem Polypropylen besteht bzw. im Wesentlichen besteht.

4. Spinnvlieslaminat nach einem der Ansprüche 1 bis 3, wobei mindestens eine Spinnvlieslage des Laminates gekräuselte Endlosfilamente mit einem Titer bis 2 denier, vorzugsweise mit einem Titer kleiner 2 denier, bevorzugt mit einem Titer von 1 bis 1,7 denier und besonders bevorzugt von 1,2 bis 1,7 denier aufweist.

5. Spinnvlieslaminat nach einem der Ansprüche 1 bis 4, wobei die erste Komponente die Mantelkomponente ist und die zweite Komponente die Kernkomponente ist.

6. Spinnvlieslaminat nach einem der Ansprüche 1 bis 5, wobei mindestens 25 % aller Filamente bzw. Endlosfilamente des Laminates (Faseranteil) gekräuselte Endlosfilamente mit Kern-Mantel-Konfiguration, insbesondere mit exzentrischer Kern-Mantel-Konfiguration sind.

7. Spinnvlieslaminat nach einem der Ansprüche 5 oder 6, wobei bei den gekräuselten Endlosfilamenten mit exzentrischer Kern-Mantel-Konfiguration der Mantel der Filamente - im Filamentquerschnitt gesehen - über zumindest 20 %, insbesondere über zumindest 25 %, vorzugsweise über zumindest 30 %, bevorzugt über zumindest 35 % und besonders bevorzugt über zumindest 40 % des Filamentumfanges eine konstante Dicke D bzw. eine im wesentlichen konstante Dicke D aufweist und wobei zweckmäßigerweise die Dicke des Mantels im Bereich seiner konstanten bzw. im wesentlichen konstanten Dicke D 0,1 bis 4 $\mu$m, vorzugsweise 0,1 bis 3 $\mu$m, bevorzugt 0,1 bis 2 $\mu$m und sehr bevorzugt 0,1 bis 0,9 $\mu$m beträgt.

8. Spinnvlieslaminat nach einem der Ansprüche 1 bis 7, wobei das Laminat zumindest drei Spinnvlieslagen aufweist, wobei mindestens eine Spinnvlieslage mit gekräuselten Endlosfilamenten - insbesondere mit gekräuselten Endlosfilamenten mit exzentrischer Kern-Mantel-Konfiguration - an einer Außenseite des Laminates angeordnet ist und wobei vorzugsweise der Titer der Endlosfilamente dieser Spinnvlieslage bis 2 denier beträgt, bevorzugt weniger als 2 denier beträgt, insbesondere 1 bis 1,7 denier und sehr bevorzugt 1,2 bis 1,7 denier beträgt.

9. Spinnvlieslaminat nach einem der Ansprüche 1 bis 8, wobei mindestens eine Spinnvlieslage gekräuselte Endlosfilamente mit Seite-an-Seite-Konfiguration aufweist.

10. Spinnvlieslaminat nach einem der Ansprüche 1 bis 9, wobei das Laminat eine Flächenmasse im Bereich von 10 bis 40 g/m$^2$, insbesondere im Bereich von 12 bis 35 g/m$^2$, vorzugsweise im Bereich von 13 bis 30 g/m$^2$, bevorzugt von 14 bis 25 g/m$^2$ und sehr bevorzugt von 15 bis 22 g/m$^2$ aufweist.

**11.** Spinnvlieslaminat nach einem der Ansprüche 1 bis 10, wobei die erste Komponente zumindest ein Polypropylen-Copolymer (CoPP) aufweist, wobei das Polypropylen-Copolymer vorzugsweise einen Anteil des Co-Monomers von 1 bis 6 Gew.-%, bevorzugt von 1,5 bis 5 Gew.-% aufweist.

**12.** Spinnvlieslaminat nach einem der Ansprüche 1 bis 11, wobei die erste und die zweite Komponente unterschiedliche Schmelzflussraten aufweisen und wobei bei Endlosfilamenten mit Kern-Mantel-Konfiguration vorzugsweise die die Kernkomponente bildende zweite Komponente eine höhere Schmelzflussrate aufweist als die die Mantelkomponente bildende erste Komponente.

**13.** Spinnvlieslaminat nach einem der Ansprüche 1 bis 12, wobei das Verhältnis der Schmelzflussrate der zweiten Komponente - insbesondere der Kernkomponente - zur Schmelzflussrate der ersten Komponente - insbesondere der Mantelkomponente - 0,9 bis 2,2, vorzugsweise 1 bis 2 beträgt.

**14.** Spinnvlieslaminat nach einem der Ansprüche 1 bis 13, wobei das Verhältnis des Polydispersitätsindex (PI) der ersten Komponente - insbesondere der Mantelkomponente - zum Polydispersitätsindex (PI) der zweiten Komponente - insbesondere der Kernkomponente - 0,9 bis 1,4, insbesondere 1 bis 1,35 beträgt.

**15.** Spinnvlieslaminat nach einem der Ansprüche 1 bis 14, wobei die Schmelztemperatur der ersten Komponente - insbesondere der Mantelkomponente - kleiner ist als die Schmelztemperatur der zweiten Komponente - insbesondere der Kernkomponente - und wobei die Schmelztemperaturdifferenz zweckmäßigerweise 0 bis 20 °C, vorzugsweise 1 bis 18 °C und bevorzugt 2 bis 16 °C beträgt.

**16.** Spinnvlieslaminat nach einem der Ansprüche 1 bis 15, wobei die zweite Komponente bzw. die als Kernkomponente eingesetzte zweite Komponente zumindest ein Gleitmittel aufweist und zwar vorzugsweise mindestens 1000 ppm (bezogen auf das gesamte Filament) zumindest eines Gleitmittels aufweist.

**17.** Verfahren zur Herstellung eines Spinnvlieslaminates nach einem der Ansprüche 1 bis 16, mit mindestens zwei Spinnvlieslagen, wobei zumindest eine Spinnvlieslage mit gekräuselten Endlosfilamenten erzeugt wird, wobei die gekräuselten Endlosfilamente Mehrkomponentenfilamente, insbesondere Bikomponentenfilamente mit einer ersten Komponente auf Basis von Polypropylen und einer zweiten Komponente auf Basis von Polypropylen sind,

wobei zumindest eine Spinnvlieslage mittels zumindest einer Heißwalze und/oder mittels zumindest einer Kalanderwalze und/oder mit zumindest einem Heißluftofen kompaktiert bzw. vorverfestigt wird,
wobei das Spinnvlieslaminat mittels zumindest einer Kalanderwalze endverfestigt wird,

wobei das Laminat mit der Maßgabe hergestellt wird, dass die spezifische Dichte $\varrho$ [g/cm$^3$] des Spinnvlieslaminates in Abhängigkeit von der Flächenmasse des Spinnvlieslaminates unterhalb einer Grenzdichte $\varrho_G$ liegt, die durch folgende Gleichung definiert ist:

$$\varrho_G = 9\,\frac{1}{cm} \times Fl\ddot{a}chenmasse\,\frac{g}{cm^2} + 0{,}0393\,\frac{g}{cm^3}$$

und wobei mindestens eine Spinnvlieslage gekräuselte Endlosfilamente mit Kern-Mantel-Konfiguration, bevorzugt mit exzentrischer Kern-Mantel-Konfiguration, aufweist.

**18.** Verfahren nach Anspruch 17, wobei die Endverfestigung mit zumindest einer Kalanderwalze durchgeführt wird, die eine Gravur "open dot" aufweist.

**19.** Vliesaggregat mit zumindest einem Spinnvlieslaminat nach einem der Ansprüche 1 bis 16, wobei das Laminat aufgrund einer Kompression - insbesondere im Zuge der Weiterverarbeitung bzw. Weiterbehandlung - im relaxierten Zustand einen Druckverformungsrest (DVR) von maximal 30 %, insbesondere maximal 20 % und bevorzugt maximal 10 % aufweist und wobei die spezifische Dichte $\varrho$ des Laminates maximal 30 %, insbesondere maximal 20 % und bevorzugt maximal 10 % oberhalb der Grenzdichte $\varrho_G$ liegt.

**Claims**

1. Spunbonded nonwoven laminate comprising at least two spunbonded nonwoven layers, wherein at least one spunbonded nonwoven layer comprises crimped continuous filaments or consists or substantially consists of crimped continuous filaments, wherein the crimped continuous filaments are multicomponent filaments, in particular bicomponent filaments having a first component based on polypropylene and a second component based on polypropylene, wherein the specific density $\rho$ [g/cm$^3$] of the spunbonded nonwoven laminate depending on the mass per unit area of the spunbonded nonwoven laminate lies below a limiting density $\rho_G$ which is defined by the following equation:

$$\rho_G = 9\,\frac{1}{cm} \times Mass\ per\ unit\ area\ \frac{g}{cm^2} + 0.0393\,\frac{g}{cm^3}$$

and wherein at least one spunbonded nonwoven layer comprises crimped continuous filaments having a core-sheath configuration, preferably having an eccentric core-sheath configuration.

2. Spunbonded nonwoven laminate according to Claim 1, wherein the first component consists or substantially consists of a polypropylene mixture or consists or substantially consists of a polypropylene copolymer.

3. Spunbonded nonwoven laminate according to one of Claims 1 or 2, wherein the second component consists or substantially consists of a polypropylene.

4. Spunbonded nonwoven laminate according to one of Claims 1 to 3, wherein at least one spunbonded nonwoven layer of the laminate comprises crimped continuous filaments having a titre of up to 2 denier, preferably having a titre of less than 2 denier, preferably having a titre of 1 to 1.7 denier and particularly preferably of 1.2 to 1.7 denier.

5. Spunbonded nonwoven laminate according to one of Claims 1 to 4, wherein the first component is the sheath component and the second component is the core component.

6. Spunbonded nonwoven laminate according to one of Claims 1 to 5, wherein at least 25% of all the filaments or continuous filaments of the laminate (fibre fraction) are crimped continuous filaments having a core-sheath configuration, in particular having an eccentric core-sheath configuration.

7. Spunbonded nonwoven laminate according to one of Claims 5 or 6, wherein in the crimped continuous filaments having an eccentric core-sheath configuration, the sheath of the filaments, when viewed in the filament cross-section, has a constant thickness D or a substantially constant thickness D over at least 20%, in particular over at least 25%, preferably over at least 30%, more preferably over at least 35% and particularly preferably over at least 40% of the filament circumference and wherein expediently the thickness of the sheath in the region of its constant or substantially constant thickness D is 0.1 to 4 $\mu$m, preferably 0.1 to 3 $\mu$m, more preferably 0.1 to 2 um and very preferably 0.1 to 0.9 $\mu$m.

8. Spunbonded nonwoven laminate according to one of Claims 1 to 7, wherein the laminate comprises at least three spunbonded nonwoven layers, wherein at least one spunbonded nonwoven layer comprising crimped continuous filaments, in particular comprising crimped continuous filaments having an eccentric core-sheath configuration, is arranged on an outer side of the laminate and wherein preferably the titre of the continuous filaments of this spunbonded nonwoven layer is up to 2 denier, preferably less than 2 denier, in particular 1 to 1.7 denier and very preferably 1.2 to 1.7 denier.

9. Spunbonded nonwoven laminate according to one of Claims 1 to 8, wherein at least one spunbonded nonwoven layer comprises crimped continuous filaments with side-by-side configuration.

10. Spunbonded nonwoven laminate according to one of Claims 1 to 9, wherein the laminate has a mass per unit area in the range of 10 to 40 g/m$^2$, in particular in the range of 12 to 35 g/m$^2$, preferably in the range of 13 to 30 g/m$^2$, more preferably of 14 to 25 g/m$^2$ and very preferably of 15 to 22 g/m$^2$.

11. Spunbonded nonwoven laminate according to one of Claims 1 to 10, wherein the first component comprises at least one polypropylene copolymer (CoPP), wherein the polypropylene copolymer preferably has a fraction of the co-monomer of 1 to 6 wt.%, preferably of 1.5 to 5 wt.%.

12. Spunbonded nonwoven laminate according to one of Claims 1 to 11, wherein the first and the second component have different melt flow rates and wherein in continuous filaments having a core-sheath configuration preferably the second component forming the core component has a higher melt flow rate than the first component forming the sheath component.

13. Spunbonded nonwoven laminate according to one of Claims 1 to 12, wherein the ratio of the melt flow rate of the second component, in particular of the core component, to the melt flow rate of the first component, in particular the sheath component, is 0.9 to 2.2, preferably 1 to 2.

14. Spunbonded nonwoven laminate according to one of Claims 1 to 13, wherein the ratio of the polydispersity index (PI) of the first component, in particular of the sheath component, to the polydispersity index (PI) of the second component, in particular the core component, is 0.9 to 1.4, in particular 1 to 1.35.

15. Spunbonded nonwoven laminate according to one of Claims 1 to 14, wherein the melting temperature of the first component, in particular of the sheath component, is lower than the melting temperature of the second component, in particular of the core component, and wherein the melting temperature difference is expediently 0 to 20°C, preferably 1 to 18°C and more preferably 2 to 16°C.

16. Spunbonded nonwoven laminate according to one of Claims 1 to 15, wherein the second component or the second component used as the core component comprises at least one lubricant and specifically comprises at least 1000 ppm (relative to the total filament) of at least one lubricant.

17. Method for producing a spunbonded nonwoven laminate according to one of Claims 1 to 16, comprising at least two spunbonded nonwoven layers, wherein at least one spunbonded nonwoven layer is produced with crimped continuous filaments, wherein the crimped continuous filaments are multicomponent filaments, in particular bicomponent filaments having a first component based on polypropylene and a second component based on polypropylene,

wherein at least one spunbonded nonwoven layer is compacted or pre-consolidated by means of at least one hot roller and/or by means of at least one calender roller and/or by means of at least one hot air oven, wherein the spunbonded nonwoven laminate is finally consolidated by means of at least one calender roller, wherein the laminate is produced subject to the condition that the specific density $\rho$ [g/cm$^3$] of the spunbonded nonwoven laminate depending on the mass per unit area of the spunbonded nonwoven laminate lies below a limiting density $\rho_G$ which is defined by the following equation:

$$\rho_G = 9\frac{1}{cm} \times Mass\ per\ unit\ area\ \frac{g}{cm^2} + 0.0393\frac{g}{cm^3}$$

and wherein at least one spunbonded nonwoven layer comprises crimped continuous filaments having a core-sheath configuration, preferably having an eccentric core-sheath configuration.

18. Method according to Claim 17, wherein the final consolidation is performed using at least one calender roller which has an "open dot" engraving.

19. Nonwoven unit comprising at least one spunbonded nonwoven laminate according to one of Claims 1 to 16, wherein as a result of a compression, in particular in the course of the further processing or further treatment, the laminate has a pressure deformation residue (DVR) in the relaxed state of a maximum of 30%, in particular a maximum of 20% and preferably a maximum of 10% and wherein the specific density $\rho$ of the laminate is a maximum of 30%, in particular a maximum of 20% and preferably a maximum of 10% above the limiting density $\rho_G$.

**Revendications**

1. Stratifié non-tissé filé-lié comprenant au moins deux couches de non-tissé filé-lié, au moins une couche de non-tissé filé-lié comportant des filaments continus frisés ou étant constituée ou sensiblement constituée de filaments continus frisés, les filaments continus frisés étant des filaments multicomposants, notamment des filaments bicomposants avec un premier composant à base de polypropylène et un deuxième composant à base de polypropylène, en fonction du grammage du stratifié non-tissé filé-lié, la densité spécifique $\varrho$ [g/cm³] du stratifié non-tissé filé-lié étant inférieure à une densité limite $\varrho G$, qui est définie par l'équation suivante:

$$\varrho G = 9 \frac{1}{cm} \; x \; grammage \, \frac{g}{cm^2} + 0{,}0393 \, \frac{g}{cm^3}$$

et au moins une couche de non-tissé filé-lié comportant des filaments continus frisés de configuration âme-gaine, de préférence de configuration âme-gaine excentrique.

2. Stratifié non-tissé filé-lié selon la revendication 1, le premier composant étant constitué ou étant sensiblement constitué d'un mélange de polypropylène ou étant constitué ou sensiblement constitué d'un copolymère de polypropylène.

3. Stratifié non-tissé filé-lié selon l'une quelconque des revendications 1 ou 2, le deuxième composant étant constitué ou sensiblement constitué d'un polypropylène.

4. Stratifié non-tissé filé-lié selon l'une quelconque des revendications 1 à 3, au moins une couche de non-tissé filé-lié du stratifié comportant des filaments continus frisés d'un titre de jusqu'à 2 deniers, de préférence d'un titre inférieur à 2 deniers, de manière préférentielle, d'un titre de 1 à 1,7 deniers et de manière particulièrement préférentielle de 1,2 à 1,7 deniers.

5. Stratifié non-tissé filé-lié selon l'une quelconque des revendications 1 à 4, le premier composant étant le composant de la gaine et le deuxième composant étant le composant de l'âme.

6. Stratifié non-tissé filé-lié selon l'une quelconque des revendications 1 à 5, au moins 25 % de tous les filaments ou filaments continus du stratifié (teneur en fibres) étant des filaments continus frisés de configuration âme-gaine, notamment de configuration âme-gaine excentrique.

7. Stratifié non-tissé filé-lié selon l'une quelconque des revendications 5 ou 6, dans les filaments continus frisés à configuration âme-gaine excentrique, la gaine des filaments (considérée dans la section transversale des filaments) présentant sur au moins 20 %, notamment sur au moins 25 %, de préférence sur au moins 30 %, de manière préférentielle, sur au moins 35 % et de manière particulièrement préférentielle, sur au moins 40 % de la périphérie du filament une épaisseur D constante, ou une épaisseur D sensiblement constante et opportunément, l'épaisseur de la gaine s'élevant dans la zone de son épaisseur D constante ou sensiblement constante de 0,1 à 4 $\mu$m, de préférence de 0,1 à 3 $\mu$m, de manière préférentielle, de 0,1 à 2 $\mu$m et de manière très préférentielle, de 0,1 à 0,9 $\mu$m.

8. Stratifié non-tissé filé-lié selon l'une quelconque des revendications 1 à 7, le stratifié comportant au moins trois couches de non-tissé filé-lié, au moins une couche de non-tissé filé-lié à filaments continus frisés (notamment à filaments continus frisés à configuration âme-gaine excentrique) étant placée sur une face extérieure du stratifié et de préférence, le titre des filaments continus de ladite couche de non-tissé filé-lié étant de jusqu'à 2 deniers, de préférence inférieure à 2 deniers, notamment de 1 à 1,7 deniers et de manière très préférentielle, de 1,2 à 1,7 deniers.

9. Stratifié non-tissé filé-lié selon l'une quelconque des revendications 1 à 8, au moins une couche de non-tissé filé-lié comportant des filaments continus frisés de configuration côte à côte.

10. Stratifié non-tissé filé-lié selon l'une quelconque des revendications 1 à 9, le stratifié présentant un grammage de l'ordre de 10 à 40 g/m², notamment de l'ordre de 12 à 35 g/m², de préférence de l'ordre de 13 à 30 g/m², de manière préférentielle, de 14 à 25 g/m² et de manière très préférentielle, de 15 à 22 g/m².

11. Stratifié non-tissé filé-lié selon l'une quelconque des revendications 1 à 10, le premier composant comportant au moins un copolymère de polypropylène (CoPP), le copolymère de polypropylène présentant de préférence une teneur de 1 à 6 % en poids, de préférence de 1,5 à 5 % en poids du comonomère.

12. Stratifié non-tissé filé-lié selon l'une quelconque des revendications 1 à 11, le premier et le deuxième composants faisant preuve de différents indices de fluidité et dans les filaments continus de configuration âme-gaine, le deuxième composant constituant le composant d'âme faisant preuve de préférence d'un indice de fluidité plus élevé que le premier composant constituant le composant de la gaine.

13. Stratifié non-tissé filé-lié selon l'une quelconque des revendications 1 à 12, le rapport de l'indice de fluidité du deuxième composant (notamment du composant de l'âme) à l'indice de fluidité du premier composant (notamment du composant de la gaine) étant de 0,9 à 2,2, de préférence de 1 à 2.

14. Stratifié non-tissé filé-lié selon l'une quelconque des revendications 1 à 13, le rapport de l'indice de polydispersité (PI) du premier composant (notamment du composant de la gaine) à l'indice de polydispersité (PI) du deuxième composant (notamment du composant de l'âme) étant de 0,9 à 1,4, notamment de 1 à 1,35.

15. Stratifié non-tissé filé-lié selon l'une quelconque des revendications 1 à 14, la température de fusion du premier composant (notamment du composant de la gaine) étant inférieure à la température de fusion du deuxième composant (notamment du composant de l'âme) et la différence de température de fusion étant opportunément de 0 à 20 °C, de préférence de 1 à 18 °C et de manière préférentielle, de 2 à 16 °C.

16. Stratifié non-tissé filé-lié selon l'une quelconque des revendications 1 à 15, le deuxième composant ou le deuxième composant mis en œuvre en tant que composant d'âme comportant au moins un lubrifiant, à savoir de préférence au moins 1000 ppm (en rapport au filament total) d'au moins un lubrifiant.

17. Procédé, destiné à produire un stratifié non-tissé filé-lié selon l'une quelconque des revendications 1 à 16, comprenant au moins deux couches de non-tissé filé-lié, au moins une couche de non-tissé filé-lié étant créée avec des filaments continus frisés, les filaments continus frisés étant des filaments multicomposants, notamment des filaments bicomposants avec un premier composant à base de polypropylène et un deuxième composant à base de polypropylène,

   au moins une couche de non-tissé filé-lié étant compactée ou préconsolidée au moyen d'au moins un rouleau chauffant et / ou au moyen d'au moins un rouleau de calandrage et / ou avec au moins un four à convection, le stratifié non-tissé filé-lié étant soumis à une consolidation finale au moyen d'au moins un rouleau de calandrage,

   le stratifié étant produit avec le critère, qu'en fonction du grammage du stratifié non-tissé filé-lié, la densité spécifique $\varrho$ [g/cm³] du stratifié non-tissé filé-lié soit inférieure à une densité limite $\varrho G$, qui est définie par l'équation suivante:

$$\varrho G = 9\,\frac{1}{cm}\,\text{x}\,grammage\,\frac{g}{cm^2} + 0{,}0393\,\frac{g}{cm^3}$$

   et au moins une couche de non-tissé filé-lié comportant des filaments continus frisés de configuration âme-gaine, de manière préférentielle, de configuration âme-gaine excentrique.

18. Procédé selon la revendication 17, la consolidation finale étant réalisée avec au moins un rouleau de calandrage, qui présente une gravure « open dot ».

19. Agrégat non-tissé, comprenant au moins un stratifié non-tissé filé-lié selon l'une quelconque des revendications 1 à 16, suite à une compression (notamment au cours de la mise en œuvre ultérieure ou du traitement ultérieur), le stratifié faisant preuve à l'état relâché d'une déformation rémanente à la compression (DVR) d'un maximum de 30 %, notamment d'un maximum de 20 % et de manière préférentielle, d'un maximum de 10 % et la densité spécifique $\varrho$ du stratifié étant supérieure d'un maximum 30 %, notamment d'un maximum de 20 % et de manière préférentielle, d'un maximum de 10 % à la densité limite $\varrho G$.

*Fig.1*

Fig.2

2

15

14

D

Dichte über Flächenmasse

Flächenmasse [gr/m²]

Dichte [gr/cm³]

O Erfindung: Titer < 1,5 denier
△ Erfindung: Titer > 1,5 denier
■ Stand der Technik: Titer > 1,5 denier
● Stand der Technik: Titer < 1,5 denier

c)

Fig. 3

Fig. 4

MFI Faktor über PI Faktor

Legend:
- △ Erfindung: Titer <1.5denier Balken 1
- □ Erfindung: Titer >1.5 denier Balken 1
- ◇ Stand der Technik Balken 1
- − Stand der Technik Balken 2
- ○ Stand der Technik Balken 3
- ✖ Erfindung: Titer<1.5 denier Balken 2
- ○ Erfindung: Titer<1.5 denier Balken 3
- ○ Erfindung: Titer>1.5 denier Balken 2
- □ Erfindung: Titer>1.5 denier Balken 3

EP 4 036 297 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3521495 B1
- EP 3246443 A